Europäisches Patentamt

European Patent Office

Office européen des brevets

(19)

(11) Veröffentlichungsnummer: **0 029 997**
**B1**

(12) # EUROPÄISCHE PATENTSCHRIFT

(45) Veröffentlichungstag der Patentschrift:
28.09.83

(51) Int. Cl.³: **B 60 N  1/04,** B 60 N  1/02,
B 60 N  1/06

(21) Anmeldenummer: 80107348.7

(22) Anmeldetag: 25.11.80

(54) Einstellvorrichtung für einen verstellbaren Fahrzeugsitz, insbesondere Kraftfahrzeugsitz.

(30) Priorität: 30.11.79  DE 7933733 U

(43) Veröffentlichungstag der Anmeldung:
10.06.81 Patentblatt 81/23

(45) Bekanntmachung des Hinweises auf die Patenterteilung:
28.09.83 Patentblatt 83/39

(84) Benannte Vertragsstaaten:
DE FR GB IT

(56) Entgegenhaltungen:
EP-A-0 007 107
DE-A-2 507 092
DE-A-2 813 534

(73) Patentinhaber: BAYERISCHE MOTOREN WERKE
Aktiengesellschaft, Postfach 40 02 40,
D-8000 München 40 (DE)

(72) Erfinder: Gersmann, Klaus, Samfeldweg 10,
D-8904 Friedberg (Wulfertshausen) (DE)
Erfinder: Mellinghoff, Ulrich, Dipl.-Ing.,
Leonrodstrasse 46a, D-8000 München 19 (DE)
Erfinder: Klemann, Dieter, Falkenstrasse 4 b,
D-8044 Hollern (DE)

(74) Vertreter: Dexheimer, Rolf, c/o Bayerische Motoren
Werke Aktiengesellschaft Postfach 40 02 40,
D-8000 München 40 (DE)

## Einstellvorrichtung für einen verstellbaren Fahrzeugsitz, insbesondere Kraftfahrzeugsitz

Die Erfindung bezieht sich auf eine Einstellvorrichtung der im Oberbegriff des Hauptanspruches beschriebenen Bauart.

Der Erfindung liegt die Aufgabe zugrunde, die in der vorveröffentlichten DE-OS 2 813 534 vorgeschlagene, dem Oberbegriff des Anspruchs 1 entsprechende Einstellvorrichtung konstruktiv so zu verbessern, daß ein geringeres Gewicht, billigere Fertigungskosten und eine kleinere, kompakte Gestaltung erzielt sind.

Diese Aufgabe ist mit den im Kennzeichen des Hauptanspruches angegebenen Mitteln gelöst.

Mit der erfindungsgemäßen Ausgestaltung der Einstellvorrichtung können ihre meisten Bauteile als Stanzteile gefertigt werden, wodurch sich in vorteilhafter Weise niedrige Fertigungskosten ergeben. Durch die erfindungsgemäße Anordnung der Arretiermittel wird ferner eine kompakte Bauweise erzielt und damit eine Einstellvorrichtung von geringem Gewicht erreicht. Eine in sich sehr steife und damit hoch belastbare Einstellvorrichtung mit relativ dünnen Beschlagplatten wird bei einer Gestaltung gemäß dem kennzeichnenden Merkmal des Anspruches 3 erzielt.

Eine besonders kleinbauende und damit kompakte Gestaltung der Einstellvorrichtung ist in weiterer Ausgestaltung der Erfindung mit den Merkmalen des Anspruches 4 erzielt, wobei der Schwenkarm der Rückenlehne um die sitzseitige Schwenkachse des Lenkers des Sitzteiles drehbeweglich angeordnet ist.

Diese Ausgestaltung mit um eine gemeinsame Schwenkachse angeordnetem Lenker und Schwenkarm ist nach Merkmalen des Anspruches 5 konstruktiv besonders vorteilhaft durch eine Buchse weitergebildet, die an beiden Enden durch Stauchen mit den Beschlagplatten kraft- und formschlüssig verbunden ist. Mit der Buchse zur einachsigen, drehbeweglichen Lagerung von Lenker und Schwenkarm ergibt sich weiter in vorteilhafter Weise ein besonders einfacher Aufbau des Sitzteiles durch an gegenüberliegenden Sitzseiten jeweils einen mit dem Aufbau fest verbundenen Drehzapfen. Auf diesem Drehzapfen ist eine erfindungsgemäße Einstellvorrichtung über die Buchse in einfachster Weise aufgesteckt zur drehbeweglichen Lagerung der Einstellvorrichtung relativ zum Sitzteil, wobei die Einstellvorrichtung auf dem Drehzapfen durch eine einfache axiale Sicherung gehalten ist. Damit können der Sitzaufbau und die Einstellvorrichtung getrennt gefertigt werden und zum bestgeeigneten Zeitpunkt in einfacher Weise zusammengebaut werden. Ferner ist mit der erfindungsgemäßen Ausgestaltung nach Anspruch 6 eine reparaturfreundliche Konstruktion erzielt.

Mit der weiteren Ausgestaltung der Einstellvorrichtung nach Anspruch 7 ist bei einer Belastung der Rückenlehne in Rückklapprichtung durch die dabei auftretende Kraftrichtung zwischen den Verzahnungen von Schwenkarm und zugehöriger Sperrklinke an dieser ein die Sperrklinke in die Verzahnung des Schwenkarmes drückendes Drehmoment um den für beide Sperrklinken gemeinsamen Lagerbolzen erzielt. Dies gilt auch für die mit dem Lenker des Sitzteiles zusammenwirkende Sperrklinke für den Fall, daß bei starker Fahrzeugverzögerung eine hohe Belastung auf den Sitz in Fahrtrichtung einwirkt, beispielsweise wenn eine nicht gesicherte Person auf dem Rücksitz gegen den Vordersitz geschleudert wird. Durch das bei Belastung über das jeweilige Drehmoment zusätzliche Ineinandergreifen der jeweiligen Sperrklinken mit der zugehörigen Verzahnung wird das Material der Bauteile bei kleiner Dimensionierung bestmöglich ausgenutzt.

Mit der Anordnung der zum Antrieb von Sitzteil und Rückenlehne vorgesehenen Gasfedern an Lenker bzw. Schwenkarm einerseits und den Beschlagplatten andererseits sind diese Antriebsmittel vorteilhaft aus dem Aufbau des Sitzteiles herausgehalten, wodurch der Sitzteilaufbau einfacher zu gestalten ist. Weiter ist diese Anordnung von Antriebsmitteln reparatur- und montagefreundlich.

Die Erfindung ist anhand zweier, in der Zeichnung dargestellter Ausführungsbeispiele beschrieben. Die Zeichnung zeigt in

Fig. 1 einen verstellbaren Kraftfahrzeugsitz mit einer zweiachsigen Einstellvorrichtung,

Fig. 2 diese zweiachsige Einstellvorrichtung vergrößert dargestellt,

Fig. 3 ein zweites Ausführungsbeispiel mit einer einachsigen Einstellvorrichtung,

Fig. 4 eine Anordnung der Sperrklinken zu der einachsigen Einstellvorrichtung nach Fig. 3.

Ein verstellbarer Kraftfahrzeugsitz 1 für einen nicht aufgezeigten Personenkraftwagen umfaßt ein Sitzteil 2 und eine Rückenlehne 3. Beide wirken über zu beiden Seiten des Kraftfahrzeugsitzes 1 angeordnete Einstellvorrichtungen 4 zusammen. Eine Einstellvorrichtung 4 umfaßt einen den Sitzteil 2 zur Sitzhöheneinstellung mit dem Fahrzeugboden verbindenden Lenker 5. Um dessen sitzseitige Schwenkachse 6 ist eine erste Beschlagplatte 7 der Einstellvorrichtung 4 drehbeweglich angeordnet. Die Beschlagplatte 7 kann beispielsweise auf einem die Lenker 5 von zwei Einstellvorrichtungen 4 drehfest verbindenden Rohr 8 drehbeweglich gelagert sein. Die dem Sitzteil 2 benachbarte erste Beschlagplatte 7 weist eine buchtartige Ausnehmung 9 auf für einen am Sitzteil 2 fest angeordneten Abstützzapfen 10.

Der ersten Beschlagplatte 7 ist im festen Abstand eine zweite Beschlagplatte 11 zugeordnet (nur teilweise dargestellt). Zwischen den Beschlagplatten 7 und 11 ist der Lenker 5 mit einem Fortsatz 12 geführt, an dem eine zur Schwenkachse 6 konzentrische Verzahnung 13 ausgebildet ist. In die Verzahnung 13 greift eine Sperrklinke 14 ein, die um einen Lagerbolzen 15 schwenkbeweglich angeordnet ist. Auf dem Lagerbolzen 15 ist eine weitere Sperrklinke 16 gleicher Form schwenkbeweglich gelagert. Diese greift in eine Verzahnung 17 an einem Schwenkarm 18 für die Rückenlehne 3 ein. Das Einrasten der unter Federwirkung stehenden Federklinken 14 und 16 wird durch Nocken 19 und 20 erreicht und gesichert. Die Nocken 19 und 20 sind zur gleichzeitigen Arretierung des Lenkers 5 und des Schwenkarmes 18 mit den Beschlagplatten 7 und 11 der Einstellvorrichtung 4 über eine vorgespannte Feder 21 gegensinnig angetrieben. Zur Festlegung des gegenseitigen Abstandes der Beschlagplatten 7 und 11 greift der für beide Sperrklinken 14 und 16 gemeinsame Lagerbolzen 15 über im Durchmesser abgesetzte Abschnitte in Durchbrechungen der Beschlagplatten 7 und 11 ein. Mit diesen kann der gemeinsame Lagerbolzen 15 fest verbunden sein. Der Lagerbolzen 15 weist ferner einen über die vom Sitzteil 2 entfernt angeordnete Beschlagplatte 11 hinausragenden Zapfen 22 auf zur schwenkbeweglichen Lagerung eines Handhebels 23. Der Handhebel 23 weist einen Schaltfinger 24 mit Führungsflächen 25 und 26 auf. Die Führungsflächen 25 und 26 wirken mit Anschlägen 27 und 28 an den beiderseits des Schaltfingers 24 angeordneten Nocken 19 und 20 unmittelbar zusammen.

Wird der Handhebel 23 gemäß Pfeilrichtung »A« betätigt, wird der Nocken 20 so weit verschwenkt, daß die unter Federwirkung stehende Sperrklinke 16 außer Eingriff mit der Verzahnung 17 am Schwenkarm 18 kommt. Ist anschließend die gewünschte Neigung der Rückenlehne 3 über den Schwenkarm 18 erreicht, wird der Handhebel 23 in seine Mittelstellung zurückgebracht. Zur Sitzhöheneinstellung ist der Handhebel 23 dagegen in Richtung »B« zu bewegen. Hierbei wird der Nocken 19 so weit verschwenkt, daß die federbelastete Sperrklinke 14 außer Eingriff mit der Verzahnung 13 am Lenker 5 kommt. Bei Mittelstellung des Handhebels 23 sind demnach Lenker 5 und Schwenkarm 18 an den Beschlagplatten 7 und 11 arretiert.

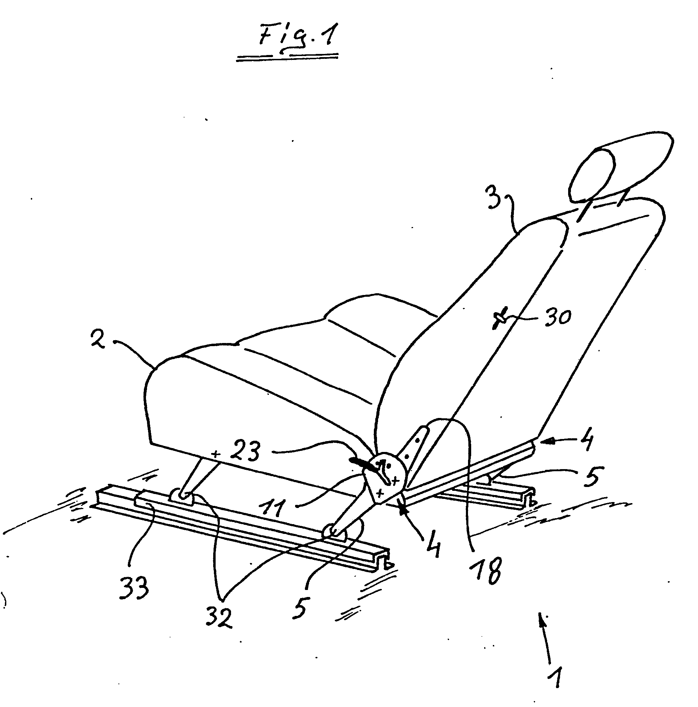

Zwischen den Beschlagplatten 7 und 11 ist ein weiterer Nocken 29 schwenkbeweglich angeordnet. Dieser weist eine zu seiner Schwenkachse exzentrisch angeordnete Kurvenbahn auf, mit der er am Abstützzapfen 10 zur Verriegelung der Einstellvorrichtung 4 am Sitzteil 2 anliegt. Der Nocken 29 ist beispielsweise über eine Handbetätigung 30, Fig. 1, an der Rückenlehne 3 außer Eingriff mit dem Abstützzapfen 10 zu bringen. Hierauf kann bei in Mittelstellung belassenem Handhebel 23 durch Vorkippen der Rückenlehne 3 der Kraftfahrzeugsitz 1 nach vorne verlagert werden, wie dies beispielsweise zum erleichterten Einstieg bei einem zwei-türigen Personenkraftwagen vorteilhaft ist. Dabei schwenkt der Lenker 5 und mit ihm die Einstellvorrichtung 4 einschließlich des an den Platten arretierten Schwenkarmes 18 um die bodenseitige Achse 31 eines Lagers 32. Das Lager 32 kann auf einer zur Längsverstellung des Fahrzeugsitzes 1 vorgesehenen Schiene 33 angeordnet sein.

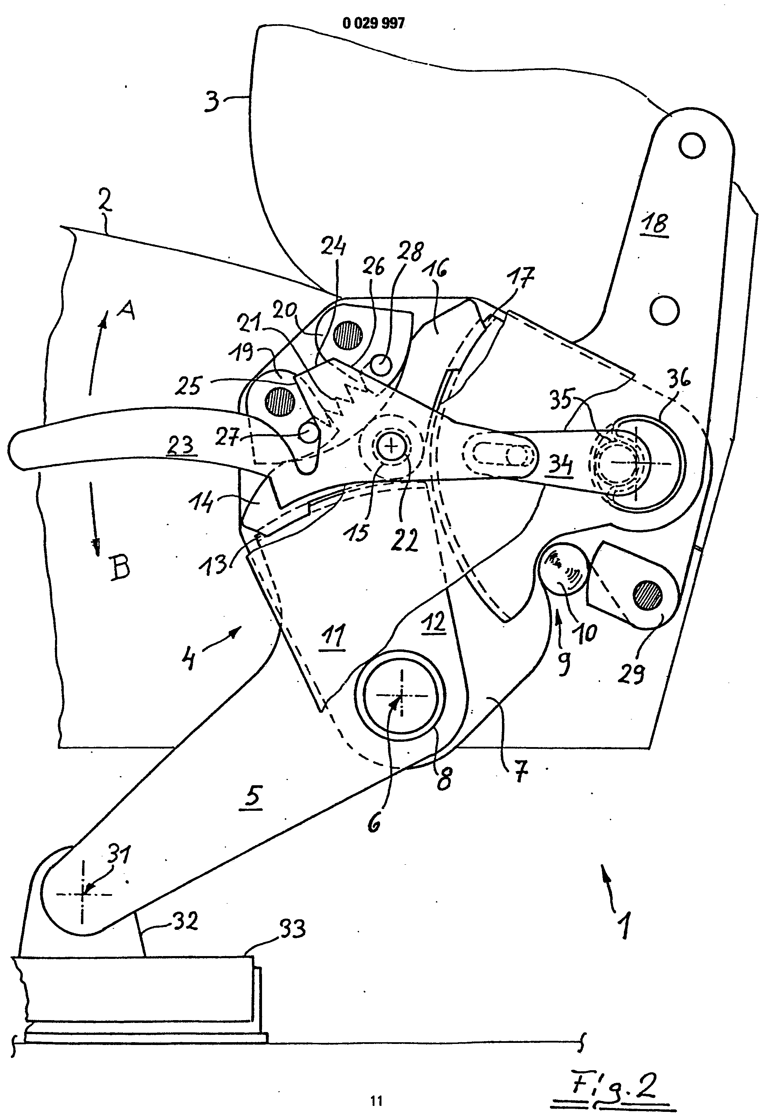

Wie aus Fig. 2 hervorgeht, sind die Schwenkbolzen sämtlicher Nocken 19 bzw. 20 bzw. 29 im Randbereich der Beschlagplatten 7 und 11 angeordnet. Um eine steife und damit hoch belastbare Einstellvorrichtung 4 aus relativ dünnen Beschlagplatten 7 und 11 zu erreichen, sind die Beschlagplatten 7 und 11 zusätzlich über die Schwenkbolzen im gegenseitigen Abstand fixiert und miteinander fest verbunden. Eine kostengünstige Fertigung der Einstellvorrichtung 4 ist ferner dadurch erreicht, daß sowohl die Nocken 19, 20, 29 als auch die Sperrklinken 14 und 16 jeweils als Gleichteile durch Stanzen gebildet sind.

Schließlich können zwei an einem Fahrzeugsitz 1 angeordnete Einstellvorrichtungen 4 über einen einzigen Handhebel 23 gemeinsam betätigt sein. Hierfür wirkt der Handhebel 23 auf einen Übertragungshebel 34 ein, der mit einer aus einem Rohr 35 gebildeten Schaltwelle drehfest verbunden ist. Diese trägt am anderen Ende einen weiteren Übertragungshebel zur Einwirkung auf einen Schaltfinger (nicht dargestellt). Sind ferner die Schwenkarme 18 beider Einstellvorrichtungen 4 auf einem gemeinsamen Rohr 36 drehfest angeordnet, kann die Schaltwelle 35 in radial gerichteten Eindrückungen am Rohr 36 drehbeweglich gelagert sein. Hierdurch ist ebenfalls ein an Teilen geringer Aufbau bei hoher Festigkeit erreicht.

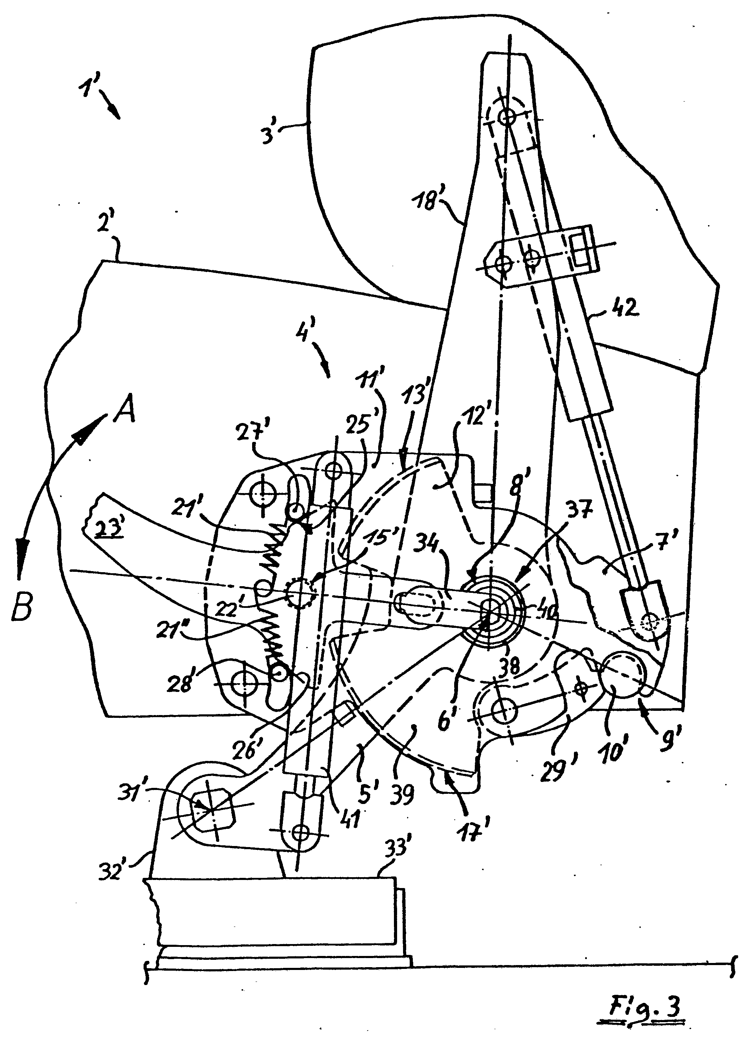

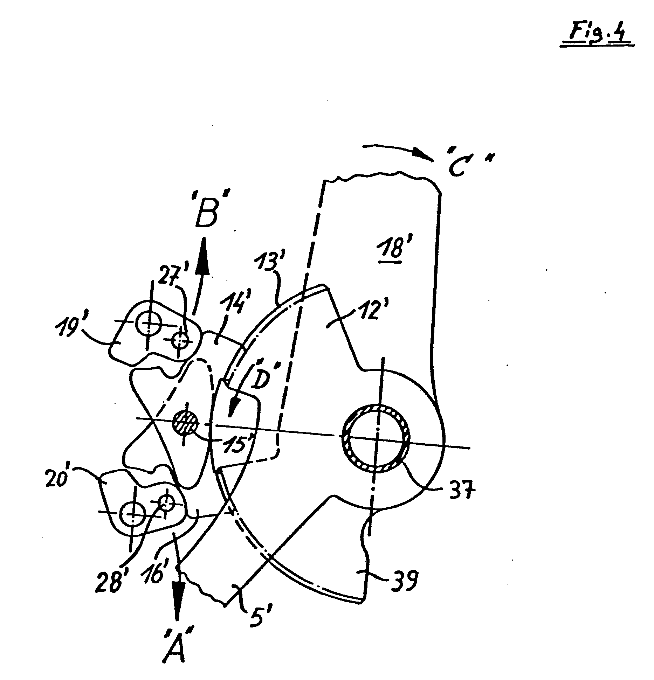

Eine sowohl in ihrem Aufbau als auch in der Anordnung an einem Kraftfahrzeugsitz 1' besonders vorteilhafte Einstellvorrichtung 4' nach Fig. 3 (dem ersten Ausführungsbeispiel entsprechende Teile sind hierbei mit (') bezeichnet) ist dadurch erreicht, daß der Schwenkarm 18' der Rückenlehne 3' um die sitzseitige Schwenkachse 6' des den Sitzteil 2' zur Sitzhöheneinstellung mit dem Fahrzeugboden verbindenden Lenkers 5' drehbeweglich angeordnet ist. Der Lenker 5' und der Schwenkarm 18' sind dabei auf einer gemeinsamen Buchse 37, Fig. 4, drehbeweglich angeordnet. Die Buchse 37 ist zwischen den Beschlagplatten 7' und 11' angeordnet und weist im Durchmesser abgesetzte Endabschnitte auf, die über die Beschlagplatten 7' und 11' hinaus verlängert sind für je einen durch Stauchen angeformten Anschlagbund 38. Damit sind die als gleiche Stanzteile ausgebildeten Beschlagplatten 7' und 11' in ihrem gegenseitigen Abstand neben dem für beide Sperrklinken 14' und 16' gemeinsamen Lagerbolzen 15' zusätzlich über die abgesetzte Buchse 37 festgelegt. Die Beschlagplatten 7' und 11' von zu jeder Seite des Kraftfahrzeugsitzes 1' angeordneten Einstellvorrichtungen 4' sind jeweils über die Buchse 37 auf einem an jeder Seite des Sitzteiles 2' fest angeordneten Drehzapfen 40 drehbeweglich angeordnet. Die Drehzapfen 40 können beispielsweise von den Endabschnitten eines im Aufbau des Sitzteiles 2' drehfest angeordneten Rohres 8' gebildet sein. Auf jedem der Drehzapfen 40 ist jede Einstellvorrichtung 4' in axialer Richtung auf einfache Weise gesichert.

Aus Fig. 3 geht weiter hervor, daß der Schwenkarm 18' bei steilster Stellung der Rückenlehne 3' einen von der Schwenkachse 6' aus relativ zum Sitzteil 2' schräg nach vorne unten gerichteten Fortsatz 39 aufweist und der Lenker 5' bei tiefster Stellung des Sitzteiles 2' bzw. des Sitzes 1' einen schräg nach vorne oben gerichteten Fortsatz 12'. Wie aus Fig. 4 näher hervorgeht, weisen die Fortsätze 12' und 39 zur Schwenkachse 6' im gleichen Abstand konzentrisch angeordnete Verzahnungen 13' bzw. 17' auf, in die die Sperrklinken 14' bzw. 16' eingreifen. Der für beide Sperrklinken 14' und 16' gemeinsame Lagerbolzen 15', auf dessen Zapfen 22' der Handhebel 23' drehbeweglich angeordnet ist, ist außerhalb des Schwenkbereichs der Fortsätze 12' und 39 in Richtung Vorderkante des Sitzteiles 2' nach vorne versetzt angeordnet. Mit dem nach vorne versetzt angeordneten Lagerbolzen 15' ist erreicht, daß bei einer Belastung des Schwenkarmes 18' durch die Rückenlehne in Rückklapprichtung gemäß Pfeil »C« die dabei zwischen der Verzahnung 17' und der der Sperrklinke 16' auftretende Kraft an der Sperrklinke 16' ein diese in die Verzahnung 17' drückendes Drehmoment um den Lagerbolzen 15' bewirkt. Ein die Sperrklinke 14' in die Verzahnung 13' des Lenkers 5' treibendes Drehmoment um den Lagerbolzen 15' ist erzielt bei einer Belastung des Lenkers 5' in Pfeilrichtung »D«.

Zum Lösen der Arretierung für den Schwenkarm 18' ist der Nocken 20' über den Handhebel 23' gemäß Pfeilrichtung »A« in Fig. 4 außer Eingriff gebracht mit der Sperrklinke 16'. Zum Lösen der Arretierung für den Lenkerhebel 5' zur Sitzhöhenverstellung ist der Nocken 19' über den Handhebel 23' gemäß der in Fig. 4 angegebenen Pfeilrichtung »B« außer Eingriff gebracht mit der Sperrklinke 14'. Das Verschwenken der Nocken 19' und 20' ist über am Handhebel 23' angeordnete Führungsflächen 25' und 26' erzielt, die jeweils mit einem Anschlag 27' am Nocken 19' bzw. einem Anschlag 28' am Nocken 20' zusammenwirken. Die Nocken 19' und 20' sind zur gleichzeitigen Arretierung des Lenkers 5' und des Schwenkarmes 18' mit den Beschlagplatten 7' und 11' der Einstellvorrichtung 4' über vorgespannte Federn 21' und 21'' gegensinnig angetrieben. Über die Federn 21' und 21'' ist der Handhebel 23' zugleich in Mittelstellung gehalten.

Bei der Einstellvorrichtung 4' sind als Antriebsmittel zur Höhenverstellung des Kraftfahrzeugsitzes 1' bzw. des Sitzteiles 2' sowie zur Einstellung der Neigung der Rückenlehne 3' jeweils Gasfedern vorgesehen, wobei eine Gasfeder 41 am Lenker 5' und eine Gasfeder 42 am Schwenkarm 18' angreift und beide Gasfedern 41 und 42 andernends an den Beschlagplatten 7' und 11' abgestützt sind. Beide Gasfedern 41 und 42 weisen jeweils eine progressive Kennung auf.

**Patentansprüche**

1. Einstellvorrichtung (4, 4') für einen verstellbaren Fahrzeugsitz, insbesondere Kraftfahrzeugsitz (1, 1'), umfassend einen den Sitzteil (2, 2') zur Sitzhöheneinstellung mit dem Fahrzeugboden verbindenden Lenker (5, 5'), mindestens eine um dessen sitzseitige Schwenkachse (6, 6') drehbeweglich angeordnete Beschlagplatte (7, 7'), die über Arretiermittel (14, 19 bzw. 14', 19') der Sitzhöheneinstellung mit dem Lenker (5, 5') drehfest verbindbar und mit dem Sitzteil (2, 2') drehgesichert verriegelbar ist, sowie einen an der Rückenlehne (3, 3') fest angeordneten Schwenkarm (18, 18'), der zur Verstellung der Lehnenneigung an der Beschlagplatte (7, 7') dreh- und arretierbar angeordnet ist und über den bei Arretierung an der Beschlagplatte (7, 7') nach deren Entriegelung vom Sitzteil (2, 2') eine Kippbewegung der Rückenlehne (3, 3') in den an der Beschlagplatte (7, 7') arretierten Lenker (5, 5') zur Sitzverlagerung einleitbar ist, wobei zur jeweiligen Arretierung mit der Beschlagplatte (7, 7') schwenkbeweglich verbundene Sperrklinken (14, 14' bzw. 16, 16') in Raststellen an Lenker (5, 5') und Schwenkarm (18, 18') eingerastet sind und die Einrastung durch Nocken (19, 19' bzw. 20, 20') gesichert ist, die von einem einzigen, nach zwei Richtungen schwenkbaren Handhebel (23, 23') betätigbar sind, ferner die Sperrklinken und die Nocken jeweils als Gleichteile ausgebildet sind, dadurch gekennzeichnet,

— daß die Sperrklinken (14, 14' bzw. 16, 16'), die Nocken (19, 19' bzw. 20, 20'), der Lenker (5, 5') sowie der Schwenkarm (18, 18') gemeinsam zwischen zwei als Stanzteile ausgebildeten Beschlagplatten (7, 7' bzw. 11, 11') angeordnet sind,
— deren gegenseitiger Abstand über einen für beide Sperrklinken gemeinsamen Lagerbolzen (15, 15') festgelegt ist,
— an dem ein über eine der Beschlagplatten hinausragender Zapfen (22, 22') zur schwenkbeweglichen Lagerung des Handhebels (23, 23') angeordnet ist,
— der über Führungsflächen (25, 25' bzw. 26, 26') mit Anschlägen (27, 27' bzw. 28, 28') an den — bezogen auf Hebelmittelstellung — beiderseits des Hebelschaltorgans angeordneten Nocken (19, 19' bzw. 20, 20') unmittelbar zusammenwirkt,
— wobei die Nocken über mindestens ein vorgespanntes Federelement (21 bzw. 21' und 21'') in Sicherungsstellung der Sperrklinken gehalten sind.

2. Einstellvorrichtung nach Anspruch 1, dadurch gekennzeichnet, daß wenigstens die dem Sitzteil (2, 2') benachbarte Beschlagplatte (7, 7') eine buchtartige Ausnehmung (9, 9') aufweist für einen am Sitzteil fest angeordneten Abstützzapfen (10, 10′), der zur Verriegelung der Einstellvorrichtung (4, 4′) am Sitzteil mit einem weiteren zwischen den Beschlagplatten (7, 7′ bzw. 11, 11′) schwenkbeweglich angeordneten Nocken (29, 29′) zusammenwirkt.

3. Einstellvorrichtung nach Anspruch 2, dadurch gekennzeichnet, daß die Beschlagplatten (7, 7′ bzw. 11, 11′) über Schwenkbolzen sämtlicher Nocken (19, 19′ bzw. 20, 20′ bzw. 29, 29′) zusätzlich im gegenseitigen Abstand fixiert und miteinander fest verbunden sind.

4. Einstellvorrichtung nach einem oder mehreren der Ansprüche 1 bis 3, dadurch gekennzeichnet, daß der Schwenkarm (18′) um die sitzseitige Schwenkachse (6′) des Lenkers (5′) drehbeweglich angeordnet ist.

5. Einstellvorrichtung nach Anspruch 4, dadurch gekennzeichnet, daß der Lenker (5′) und der Schwenkarm (18′) auf einer Buchse (37) drehbeweglich angeordnet sind, wobei die Buchse mit im Durchmesser abgesetzten Endabschnitten über die Beschlagplatten (7′, 11′) hinaus verlängert ist für je einen angeformten Anschlagbund (38) für die Beschlagplatten.

6. Einstellvorrichtung nach Anspruch 5, dadurch gekennzeichnet, daß die Einstellvorrichtung (4′) über die Buchse (37) auf einem am Sitzteil (2′) fest angeordneten Drehzapfen (40) drehbeweglich angeordnet und axial gesichert ist.

7. Einstellvorrichtung nach den Ansprüchen 4 bis 6, dadurch gekennzeichnet,

— daß der Schwenkarm (18′) — bei steilster Rückenlehnenstellung — einen von seiner Schwenkachse (6′) aus relativ zum Sitzteil (2′) schräg nach vorne unten gerichteten Fortsatz (39) und der Lenker (5′) — bei tiefster Sitzstellung — einen schräg nach vorne oben gerichteten Fortsatz (12′) aufweist, wobei
— die Fortsätze zur Schwenkachse im gleichen Abstand konzentrisch angeordnete Verzahnungen (17′ bzw. 13′) aufweisen,
— in die Sperrklinken (16′ bzw. 14′) eingreifen, die auf einem außerhalb des Schwenkbereichs der Fortsätze nach vorne versetzt angeordneten Lagerbolzen (15′) gelagert sind.

8. Einstellvorrichtung nach einem oder mehreren der Ansprüche 1 bis 7, dadurch gekennzeichnet, daß der Lenker (5′) und der Schwenkarm (18′) jeweils über eine Gasfeder (41, 42) mit progressiver Kennung gegen die Beschlagplatten (7′, 11′) abgestützt sind.

## Claims

1. A setting device (4, 4′) for an adjustable vehicle seat, in particular a motor vehicle seat (1, 1′), comprising a guide bar (5, 5′), connecting the seat part (2, 2′) to the floor of the vehicle for the purpose of setting the height of the seat, and at least one mounting plate (7, 7′) which is arranged to rotate about that axis of rotation (6, 6′) that is nearer the seat, which mounting plate, by way of stop means (14, 19; 14′, 19′) associated with the seat-height setting means can be connected to the guide bar (5, 5′) so as not to rotate relatively thereto and can be locked to the seat part (2, 2′) in a rotationally fastened manner, as well as a swivel arm (18, 18′), which is secured to the back rest (3, 3′), is rotatably and lockably arranged on the mountig plate (7, 7′) for the purpose of adjusting the slope of the back rest, and by way of which, upon immobilization on the mounting plate (7, 7′) and following the disengagement of the mounting plate form the seat part (2, 2′), a tilting movement of the back rest (3, 3′) in the guide bars (5, 5′), immobilized on the mounting plate (7, 7′), can be initiated for the purpose of displacing the seat, and, each time that immobilization takes place, pawls (14, 14′; 16, 16′), swivellably connected to the mounting plate (7, 7′), are engaged in latching points on the guide bar (5, 5′) and swivel arm (18, 18′) and latching is ensured by means of cams (19, 19′; 20, 20′), which can be actuated by a single hand lever (23, 23′) swivellable in two directions, and furthermore the pawls and the cams are each formed as like parts, which setting device is characterized in

— that the pawls (14, 14′; 16, 16′), the cams (19, 19′; 20, 20′), the guide bar (5, 5′) and the swivel arm (18, 18′) are all arranged between two mounting plates (7, 7′C 11, 11′) which consist of stamped parts, and
— the distance between which is determined by a bearing pin (15, 15′), common to the two pawls,
— on which bearing pin is arranged a stud (22, 22′) which projects beyond the mounting plates and provides a swivelling mounting for the hand lever (23, 23′),
— which, by way of guide faces (25, 25′; 26, 26′) co-operates directly with stops (27, 27′; 28, 28′) on the cams (19, 19′; 20, 20′) which, in relation to the median position of the lever, are arranged one at each side of the lever-operating member,
— the cams being held in the festening position of the pawls by means of at least one biassed spring element (21; 21′ and 21″).

2. A setting device according to Claim 1, characterized in that at least the mounting plate (7, 7′) that is adjacent the seat part (2, 2′) has a bowed recess (9, 9′) for a support stud (10, 10′) which is firmly attached to the seat part and which, for the purpose of locking the setting device (4, 4′), on the seat part, co-operates with a further cam (29, 29′) swivellably arranged between the mounting plates (7, 7′; 11, 11′).

3. A setting device according to Claim 2, characterized in that the mounting plates (7, 7′; 11, 11′) are additionally fixed in spaced relationship and firmly interconnected by way of the swivel pins of all of the cams (19, 19'; 20, 20'; 29, 29').

4. A setting device according to any one or more of Claims 1 to 3, characterized in that the swivel arm (18') is arranged to rotate about that swivel axis (6') of the guide bar (5') that is nearer the seat.

5. A setting device according to Claim 4, characterized in that the guide bar (5') and the swivel arm (18') are rotatably arranged on a bush (37), the bush being extended beyond the mounting plates (7', 11') by end portions of reduced diameter for providing an integral stop flange (38) for each mounting plate.

6. A setting device according to Claim 5, characterized in that the setting device (4') is rotatably mounted, by way of the bush (37), on a pivot pin (40), firmly attached to the seat part (2'), and is axially secured.

7. A setting device according to any one of Claims 4 to 6, characterized

— in that the swivel arm (18') — in the steepest position of the back rest — has an extension (39) which extends from its swivel axis (6') and obliquely forwardly and downwardly in relation to the seat part (2') and the guide part (5') — in the lowest position of the seat — has an extension (12') which is directed obliquely forwardly and upwardly,
— the extensions having equidistantly spaced serrations (17'; 13') arranged concentrically in relation to the swivel axis,
— in which serrations engage the pawls (16'; 14') which are mounted on a bearing pin (15') forwardly offset outside the swivel zone of the extensions

8. A setting device according to any one or more of Claims 1 to 7, characterized in that the guide bar (5') and the swivel arm (18) are each braced against the mounting plates (7', 11') by way of a pneumatic spring (41, 42) having a progressive characteristic.

## Revendications

1. Dispositif de réglage (4, 4') pour un siège réglable de véhicule, notamment pour un siège de véhicule automobile (1, 1'), comprenant une commande (5, 5') reliant avec le plancher du véhicule le siège proprement dit (2, 2'), pour son réglage en hauteur, au moins une plaque de garniture (7, 7') mobile en rotation autour de l'axe de pivotement côté siège de cette commande, cette plaque de garniture étant susceptible d'être verrouillée par l'intermédiaire de moyens de blocage (14, 19 ou bien 14', 19') du réglage en hauteur du siège, en étant rendue solidaire en rotation de la commande (5, 5') et en étant bloquée en rotation avec le siège proprement dit (2, 2'), ainsi qu'un bras pivotant (18, 18') solidaire du dossier (3, 3'), ce bras étant disposé de façon à pouvoir tourner et à être bloqué sur la plaque de garniture (7, 7') pour permettre le réglage de l'inclinaison du dossier, tandis que, par l'intermédiaire de ce bras pivotant, lorsqu'il est bloqué sur la plaque de garniture (7, 7') après que celle-ci ait été déverrouillée de siège proprement dit (2, 2'), un mouvement de basculement du dossier (3, 3') sur la commande (5, 5') bloquée sur la plaque de garniture (7, 7') est susceptible d'être entrepris pour déplacer le siège, cependant que, pour le blocage respectif avec la plaque de garniture (7, 7'), des cliquets de blocage (14, 14' ou bient 16, 16') reliés en étant susceptibles de pivoter, sont enclenchés dans des emplacements d'enclenchement sur la commande (5, 5') et sur le bras pivotant (18, 18'), tandis que cet enclenchement est maintenu par des cames (19, 19' ou bien 20, 20'), susceptibles d'être actionnées par un levier à main unique (23, 23') susceptible de pivoter dans les deux sens, les cliquets de blocage et les cames étant en outre, respectivement constitués par des pièces identiques, dispositif caractérisé en ce que:

— les cliquets de blocage (14, 14' ou bien 16, 16') les cames (19, 19' ou bien 20, 20'), la commande (5, 5') ainsi que le bras pivotant (18, 18') sont tous disposés entre deux plaques de garniture (7, 7' ou bien 11, 11') constituées par des pièces estampées,
— la distance entre ces plaques de garniture est maintenue par l'intermédiaire d'un axe de palier (15, 15') commun aux deux liquets de blocage,
— axe sur lequel est disposé un tourillon (22, 22') faisant saillie au-delà de l'une des plaques de garniture pour permettre de monter le levier à main (23, 23') de façon qu'il puisse pivoter,
— ce levier à main coopère directement, par l'intermédiaire de surfaces de guidages (25, 25' ou bien 26, 26') avec des butées (27, 27' ou bien 28, 28') sur les cames (19, 19' ou bien 20, 20') disposées des deux côtés de l'organe de commutation du levier dans la position médiane de celui-ci,
— les cames sont maintenues par l'intermédiaire d'au moins un élément de ressort précontraint (21 ou bien 21' et 21") dans la position de blocage des cliquets de blocage.

2. Dispositif de réglage selon la revendication 1, caractérisé en ce qu'au moins la plaque de garniture (7, 7') voisine du siège proprement dit (2, 2') comporte un évidement (9, 9') en forme de douille pour un axe d'appui (10, 10') solidaire du siège proprement dit, et qui, pour permettre le verrouillage du dispositif de réglage (4, 4') sur le siège proprement dit, coopère avec une autre came (29, 29') disposée de façon à pouvoir pivoter entre les plaques de garniture (7, 7' ou bient 11, 11').

3. Dispositif de réglage selon la revendication 2, caractérisé en ce que les plaques de garniture (7, 7' ou bien 11, 11') sont, de façon supplémentaire, fixées à leurs distances réciproques, et reliées rigidement ensemble par l'intermédiaire des axes de pivotement de l'ensemble des cames (19, 19' ou bien 20, 20' ou bien 29, 29').

4. Dispositif de réglage selon une ou plusieurs des revendications 1 à 3, caractérisé en ce que le bras pivotant (18') est disposé mobile en rotation autour de l'axe de pivotement (6') côté siège de la commande (5').

5. Dispositif de réglage selon la revendication 4, caractérisé en ce que la commande (5') et le bras pivotant (18') sont disposés mobiles en rotation sur une douille (37), cette douille étant prolongée vers l'extérieur au-delà des plaques de garniture (7', 11') par des parties terminales réduites en diamètre, en formant respectivement un bandeau de butée (38) pour les plaques de garniture.

6. Dispositif de réglage selon la revendication 5, caractérisé en ce que ce dispositif de réglage (4') est disposé mobile en rotation et bloqué axialement par l'intermédiaire de la douille (37) sur un tourillon (40) disposé à poste fixe sur le siège proprement dit (2').

7. Dispositif de réglage selon les revendications 4 à 6, caractérisé en ce que:

— le bras pivotant (18') comporte un prolongement (39) orienté, lorsque le dossier est dans sa position la plus redressée, obliquement vers l'avant et vers le bas, en partant de son axe de pivotement (6') par rapport au siège proprement dit (2'), tandis que la commande (5') comporte un prolongement (12') orienté obliquement vers l'avant et vers le haut lorsque le siège est dans sa position la plus basse,

— les prolongements comportent des dentures (17' ou bien 13') disposées concentriquement à la même distance par rapport à l'axe de pivotement,

— dentures dans lesquelles viennent en prise les cliquets de blocage (16' ou bien 14') montés sur un axe de palier (15') décalé vers l'avant en dehors de la zone de pivotement des prolongements.

8. Dispositif de réglage selon une ou plusieurs des revendications 1 à 7, caractérisé en ce que la commande (5') et le bras pivotant (18') prennent respectivement appui contre les plaques de garniture (7', 11') par l'intermédiaire d'un ressort à air (41, 42) à caractéristique progressive.

## Fig.1

Fig. 2

0 029 997

Fig. 3

13

Fig.4